(19) Europäisches Patentamt
European Patent Office
Office européen des brevets

(11) EP 2 703 774 B1

(12) EUROPEAN PATENT SPECIFICATION

(45) Date of publication and mention
of the grant of the patent:
**17.11.2021 Bulletin 2021/46**

(51) Int Cl.:
**G01B 11/03** (2006.01)   **G08B 21/10** (2006.01)
**G01B 11/16** (2006.01)

(21) Application number: **11864143.0**

(22) Date of filing: **25.04.2011**

(86) International application number:
**PCT/CN2011/073233**

(87) International publication number:
**WO 2012/145884 (01.11.2012 Gazette 2012/44)**

(54) **MONITORING METHOD AND MONITORING SYSTEM OF SETTLEMENT OF ENGINEERING BUILDINGS**

ÜBERWACHUNGSVERFAHREN UND ÜBERWACHUNGSSYSTEM FÜR DIE SETZUNG VON BAUWERKEN

PROCÉDÉ ET SYSTÈME DE SURVEILLANCE DE L'AFFAISSEMENT DE CONSTRUCTIONS D'INGÉNIERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.03.2014 Bulletin 2014/10**

(73) Proprietor: **National University of Defense Technology**
**Hunan 410073 (CN)**

(72) Inventors:
• **YU, Qifeng**
**Hunan 410073 (CN)**
• **JIANG, Guangwen**
**Hunan 410073 (CN)**
• **LIU, Xiaolin**
**Hunan 410073 (CN)**
• **FU, Sihua**
**Hunan 410073 (CN)**
• **SHANG, Yang**
**Hunan 410073 (CN)**

(74) Representative: **Eisenführ Speiser**
**Patentanwälte Rechtsanwälte PartGmbB**
**Postfach 10 60 78**
**28060 Bremen (DE)**

(56) References cited:
**EP-B1- 0 632 251**     **CN-A- 1 818 546**
**CN-A- 1 818 546**     **CN-A- 101 982 841**
**JP-A- 11 211 451**     **US-A- 4 656 743**
**US-A- 4 727 329**     **US-A1- 2009 284 758**
**US-A1- 2009 284 758**

• **ZHICHAO CHAO ET AL: "Study of a pose-relay videometric method using a parallel camera series", APPLIED OPTICS, OPTICAL SOCIETY OF AMERICA, WASHINGTON, DC; US, vol. 49, no. 28, 1 October 2010 (2010-10-01), pages 5192-5198, XP001557744, ISSN: 0003-6935, DOI: 10.1364/AO.49.005192**
• **JIANG GUANGWEN: 'Study on pose Relay Videometrics Method with Camera-Series and Ship Deformations Measurement' INFORMATION SCIENCE AND TECHNOLOGY OF CHINA DOCTOR'S THESES FULL-TEXT DATABASE no. 11, 15 November 2010, XP055137231**
• **CHAO ZHICHAO. ET AL.: 'Study of a pose-relay videometric method using a parallel camera series' APPLIED OPTICS vol. 49, no. 28, 01 October 2010, pages 5192 - 5198, XP001557744**
• **None**

**Description**

**FIELD OF THE INVENTION**

The present invention relates to the field of engineering building quality detection, and particularly to a photogrammetry technology utilizing a displacement transfer camera chain, so as to achieve automatic monitoring for settlement of an engineering building.

**BACKGROUND OF THE INVENTION**

Engineering buildings, especially engineering buildings in the traffic field, such as a rail, a road, a tunnel, and other basic traffic facilities, which are widely built and used, play an extremely important role in national economy and social life. For example, a roadbed settlement, a surrounding rock deformation and a collapse accident occurred in a building process and an operating process of the basic traffic facilities will bring potential safety problems, even significant property losses and casualties. Especially in the building and development of a high-speed railway, a tiny deformation of the roadbed will lead to a drop in operation quality, which has an influence on operation safety.

For example, during a constructing process and a longtime operating process of the tunnel, due to influence of various factors, such as pressure produced by a vehicle which is traveling, extrusion stress applied on an outer wall of the tunnel by the external soil layer, and other stress resulting from empty holes in the soil layer, a local cross-section deformation and a settlement of the entirety might occur, which lead to a displacement of a tube wall of the tunnel in the longitudinal direction and in the horizontal direction. This deformation is tiny at first, but if it is not found early and maintained, then a great potential danger will be brought to safety of the tunnel, and even surrounding buildings will be also influenced.

As another example, when a vehicle is traveling on a road or a rail way, speed and weight of the vehicle and the interaction between the vehicle and the pavement will lead to occurrence of a settlement in a roadbed, which will bring a potential danger to the vehicle and personal safety. Therefore, studying and developing an automatic monitoring system for engineering buildings in the traffic field and establishing an early warning mechanism will contribute to finding the occurrence of harms in time and preventing the harms, thereby improving operation quality of the traffic facilities and avoiding property losses and casualties.

Conventional automatic monitoring system for monitoring settlement of an engineering building in the traffic field mainly use surveying and drawing instruments, such as a level gage, a range finder, a theodolite, and a total station, to perform measurement. Although these conventional systems has advantages, such as intuitive operation, easy to achieve, etc., the long observation time required for performing a monitoring task for each time, poor efficiency, heavy workload, and high measurement cost make it difficult to achieve the automation of the measurement process, and an observation time period and an observation frequency are limited, and these systems are unable to meet the increasing requirement in construction and operation maintenance of engineering buildings.

Photogrammetry is a relatively mature measurement technology, and when a camera is mounted on a fixed base and kept horizontal, it is expedient to measure settlement of an observation point. If a camera mounting platform itself has settlement, a certain technical means is needed to stably keep the camera in the horizontal direction. But in practical engineering, due to an unsteady foundation it is difficult to place a camera on a steady platform, however it is difficult and expensive to keep the camera absolutely horizontal on a unsteady platform. In practical applications, settlement, pitching change (change of an angle between an optical axis of a camera and a horizontal plane) or rotation angle change (an angle that a camera rotates around the optical axis) might occur at a camera mounting position, which brings a larger measurement error. For example, when a distance between a camera and a marker is 50 m, if the optical axis of the camera has a pitching angle of 30 arc sec, the induced measurement error is about 7.5 mm. Therefore, it is difficult to achieve a better effect in practical applications by means of traditional photogrammetry technology.

In practical applications of measuring a settlement in engineering buildings, such as a roadbed, a ground and a bridge, measurement needs to be performed in a possibly sinking environment. For example, in settlement measurement for roadbed of highway or high-speed railway, generally a measurement instrument can not be placed far from both sides of the roadbed, but the positions near to both sides of the roadbed might be regions to be measured, and these positions themselves have settlements. At present, for the engineering environment where the roadbed regions are unsteady, there is no practical and efficient method for automatically monitoring settlement of a roadbed, a ground, and a bridge for a long time. The paper "Study of a pose-relay videometric method using a parallel camera series" by Zhichao Chao et al. (Applied Optics, vol. 49, no. 28, 1 October 2010, pages 5192-5198) discloses a pose-relay videometric method that uses a parallel camera and its applicable to measuring deformation between nonintervisible and intervisable objects with a very wide angle of view.

US 4,656,743 discloses an apparatus for determining the position of a hollow section system which is pressed forward, measuring apparatus are arranged one behind the other in the hollow section system.

## SUMMARY OF THE INVENTION

In view of this, the present invention provides a method for monitoring settlement of an engineering building, which can achieve high-precise, longtime, continuous and automatic monitoring for settlement situation of an engineering building such as a roadbed, a ground or a bridge.

In a method according to claim 1 for automatically monitoring settlement of an engineering building provided by the invention, a measuring station is provided at each point to be measured, the measuring station includes: a multi-head camera station composed of two or more separate cameras that are connected together fixedly; and markers that can settle with the engineering building, and the method includes:

calibrating intrinsic parameters (a focal length, a principal point, a distortion coefficient, and the like) of each camera and a magnification of each marker that is correspondingly photographed by the camera;
synchronously acquiring images of markers by the cameras, wherein each camera images more than one different marker fixed to different points of the engineering building;
extracting a position of each marker in the image; and
performing an operation to coordinate data of the markers in accordance with an imaging geometric constraint relationship, to obtain a vertical displacement amount of a position of each marker, thereby monitoring the settlement of the engineering building.

Preferably, in a case not considering a rotation angle, a calculation equation of calculating the vertical displacement amounts of both two markers on the left and two markers on the right photographed by the multi-head camera station Ci is as follows:

$$
\begin{cases}
h_{Mi}^{Ci} = k_{Mi}^{Ci}\left(\Delta y_{Mi} - \Delta y^{Ci} - d_{Mi}^{Ci} \cdot \sin\theta^{Ci}\right) \\[2mm]
h_{Si}^{Ci} = k_{Si}^{Ci}\left(\Delta y_{Si} - \Delta y^{Ci} - d_{Si}^{Ci} \cdot \sin\theta^{Ci}\right) \\[2mm]
h_{M(i+1)}^{Ci} = k_{M(i+1)}^{Ci}\left(\Delta y_{M(i+1)} - \Delta y^{Ci} + d_{M(i+1)}^{Ci} \cdot \sin\theta^{Ci}\right) \\[2mm]
h_{S(i+1)}^{Ci} = k_{S(i+1)}^{Ci}\left(\Delta y_{S(i+1)} - \Delta y^{Ci} + d_{S(i+1)}^{Ci} \cdot \sin\theta^{Ci}\right)
\end{cases}
\qquad \text{equation 1}
$$

where, h is a displacement amount of the marker in the camera image, k is a magnification of the image to the marker therein, $\Delta y$ is a settlement amount of the marker or the multi-head camera station, d is a distance between the marker and the corresponding camera, and $\theta^{Ci}$ is an tilt angle variation amount of the multi-head camera station numbered as Ci.

At least two control points which are fixed strictly or settlement deformations of which are known are provided at a measuring point, so that the number of unknowns in the equation 1 is equal to or less than 4n.

Preferably, in a case which considers a rotation angle, a calculation equation of calculating the vertical displacement amounts of both two markers on the left and two markers on the right that are photographed by the multi-head camera station Ci is as follows:

$$
\begin{cases}
h_{Mi}^{Ci} = k_{Mi}^{Ci}\left(\Delta y_{Mi} - \Delta y^{Ci} - d_{Mi}^{Ci} \cdot \sin\theta^{Ci}\right) - \beta^{Ci} R_{Mi}^{Ci} \cos\alpha_{Mi}^{Ci} \\[2mm]
h_{Si}^{Ci} = k_{Si}^{Ci}\left(\Delta y_{Si} - \Delta y^{Ci} - d_{Si}^{Ci} \cdot \sin\theta^{Ci}\right) - \beta^{Ci} R_{Si}^{Ci} \cos\alpha_{Si}^{Ci} \\[2mm]
h_{M(i+1)}^{Ci} = k_{M(i+1)}^{Ci}\left(\Delta y_{M(i+1)} - \Delta y^{Ci} + d_{M(i+1)}^{Ci} \cdot \sin\theta^{Ci}\right) + \beta^{Ci} R_{M(i+1)}^{Ci} \cos\alpha_{M(i+1)}^{Ci} \\[2mm]
h_{S(i+1)}^{Ci} = k_{S(i+1)}^{Ci}\left(\Delta y_{S(i+1)} - \Delta y^{Ci} + d_{S(i+1)}^{Ci} \cdot \sin\theta^{Ci}\right) + \beta^{Ci} R_{S(i+1)}^{Ci} \cos\alpha_{S(i+1)}^{Ci}
\end{cases}
\qquad \text{equation 2}
$$

where, it is assumed that the coordinate systems of the camera image before and after rotation are Oxy and Ox'y' respectively, $\alpha$ is an angle between OP and the x axis, $\beta$ is an angle between the x' axis after rotation and the x axis, h is a displacement amount of the marker in the camera image, and k is a magnification of the image to the marker therein,

$\Delta y$ is a settlement amount of the marker or the multi-head camera station, d is a distance between the marker and the corresponding camera; and $\theta^{Ci}$ is an tilt angle variation amount of the multi-head camera station numbered as Ci.

Preferably, each marker is provided with two or more marker points thereon, so that the number of equations in the equation 2 is equal to or greater than 8n.

Preferably, three or more markers are provided between every two multi-head camera stations, so that the number of equations in the equation 2 is equal to 6n in the case where three markers are taken; and at least two control points which are fixed strictly or settlement deformations of which are known are provided at a measuring point, so that the number of unknowns in the equation 2 is equal to or less than 6n.

Preferably, in the case where the engineering building is a tunnel vault, a settlement amount of the tunnel vault is:

$$h_{Tj}^{Ci} = k_{Tj}^{Ci}\left(\Delta X_{Tj} - \Delta y^{Ci} + D_{Tj}^{Ci}\sin\theta^{Ci}\right) + \beta^{Ci} R_{Tj}^{Ci}\cos\alpha_{Tj}^{Ci}.$$

Preferably, in the case where the engineering building is a tunnel vault, and a marker of the tunnel vault is photographed by one camera in the multi-head camera station, and it is assumed that the angle between the camera and a camera photographing toward a horizontal direction is $\Phi$, a settlement amount of the tunnel vault is:

$$h_{Tj}^{Ci} = k_{Tj}^{Ci}\left(\left(\Delta X_{Tj} - \Delta y^{Ci}\right)\cos\phi^{Ci} + D_{Tj}^{Ci}\sin\theta_i\right) + \beta^{Ci} R_{Tj}^{Ci}\cos\alpha_{Tj}^{Ci}$$

where, a settlement amount, a pitching amount and a rotating amount of the multi-head camera station Ci are $\Delta y^{Ci}$, $\theta^{Ci}$ and $\beta^{Ci}$ respectively, the displacement amount of the photographed marker point of the tunnel vault in the image is $h_{Tj}^{Ci}$, the distance between an image point and an image principal point is $R_{Tj}^{Ci}$, the angle between a line from the image point to the image principal point and the horizontal axis of the image is $\alpha_{Tj}^{Ci}$, the settlement amount of the marker point of the tunnel vault is $\Delta X_{Tj}$, and the distance between the marker of the tunnel vault and the camera is $D_{Tj}^{Ci}$.

The present invention also provides a system for monitoring settlement of an engineering building, which can achieve high-precise, longtime, continuous and automatic monitoring for settlement of an engineering building, such as a roadbed, a ground and a bridge.

In a system according to claim 9 for automatically monitoring settlement of an engineering building provided by the invention, a measuring station is provided at each point to be measured, the measuring station includes: a multi-head camera station composed of two or more separate cameras that are connected fixedly; and markers that can settle with the engineering building; and a data processing terminal connected with the measuring stations, and the data processing terminal includes a calibrating unit, a marker position extracting unit and a vertical displacement amount calculating unit.

The cameras are adapted to synchronously acquire images of markers, wherein each camera images more than one different marker fixed to different points of the engineering building, and a geometric relationship between cameras in the multi-head camera station is set according to on-site requirements, and is fixed and known.

The calibrating unit is adapted to calibrate intrinsic parameters of each camera (a focal length, a principal point, a distortion coefficient, and the like) and a magnification of each camera to a marker that is correspondingly photographed by the camera.

The marker position extracting unit is adapted to extract a position of each marker in the image.

The vertical displacement amount calculating unit is adapted to perform operations to coordinate data of each marker in accordance with an imaging geometric constraint relationship, to obtain a vertical displacement amount of each marker, thereby monitoring the settlement of the engineering building.

Preferably, the multi-head camera station is in a fixed connection with the marker.

Preferably, in the system, a control point which is fixed strictly or settlement deformation of which is known is provided at the measuring point.

Compared with the prior art, the invention has many obvious advantages as follows.

In the invention, there is no need to adjust an optical axis of a camera to the horizontal direction, and there is also no need to use a camera self-stabilizing device, which solves a measurement problem in the practical engineering that settlement and inclination might exist at a measuring device mounting position. The multi-head camera station of the invention may be mounted in a region where roadbed itself may have settlement and inclination, which allows a high engineering practicability, thereby can achieve high-precise, longtime, continuous and automatic measurement for settlement of a roadbed, a ground or a bridge.

**BRIEF DESCRIPTION OF THE DRAWINGS**

Figure 1 is a schematic diagram showing a roadbed and a ground settlement measuring system;

Figure 2 is a schematic diagram showing arrangement of a measuring station for measuring settlement;

Figure 3 is a flow chart of a method for monitoring settlement of an engineering building;

Figure 4 is a schematic diagram of a principle of solving a settlement amount in the case of considering a camera pitching;

Figure 5 is a schematic diagram of a principle of solving a settlement amount in the case of considering a camera rotation;

Figure 6 is a schematic diagram of a system for measuring settlement of a vault;

Figure 7 is a system for measuring settlement at both sides of a roadbed;

Figure 8 is a schematic diagram of a settlement measurement way in which a multi-head camera station and a marker are fixedly connected together;

Figure 9 is a diagram showing error analysis in the case where an optical axis of a camera is not perpendicular to a moving direction of a marker; and

Figure 10 is a schematic diagram of a system for monitoring settlement of an engineering building.

**DETAILED DESCRIPTION OF THE INVENTION**

The invention provides a displacement transfer camera chain photogrammetry method, which can achieve high-precision, longtime, continuous and automatic monitoring for settlement of an engineering building, such as a roadbed, a ground or a bridge, under a condition of a measuring region where settlement might exist.

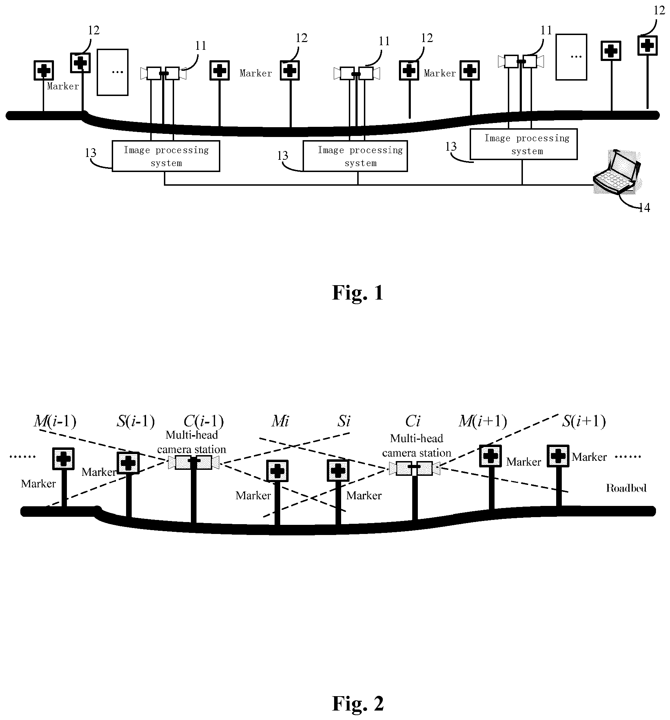

Figure 1 is a schematic diagram of a measuring system arranged along a roadbed, in which a measuring station is mounted at each point to be measured, and a multi-head camera station 11 or a marker 12 is needed to be mounted on the measuring station according to requirements. The multi-head camera station 11 is composed of two or more separate cameras that are connected together fixedly, with the separate cameras pointing to different points to be measured respectively. The multi-head camera station 11 is called "double-head camera station" when it is composed of two separate cameras. In Figure 1, two markers 12 are provided at both ends of the system and also two markers 12 provided between every two neighboring multi-head camera stations, respectively, and in the actual measurement, the number of the marker 12 may be selected according to requirements. The multi-head camera station 11 is provided with an image processing system or transmission system, and also is provided with a power supply. Furthermore, the marker 12 also needs to be provided with a power supply when it is a light emitting marker 12.

A marker 12 is a marker mounted or originally-located at each point to be measured, which is a marker 12 to be measured that can sink with the roadbed, and the marker 12 may be composed of one or more marker points recognizable by a computer. For example, the marker may be a combination marker composed of a plurality of man-made marker points (cross wires, round spots, opposite vertical angles or the like) which can be easily positioned at high precision, or may be a marker point provided on a roadbed or a railway track, even a corresponding natural landscape feature nearby a point to be measured. The marker 12 may emit light actively, and may also be imaged by reflecting sunlight or light emitted from other light sources. Preferably, the marker 12 is an infrared light emitting marker to meet a requirement of measuring all day.

A camera is an image acquisition tool in photogrammetry, which can acquire images and perform measurement dynamically in real time. A measuring link composed of a plurality of multi-head camera stations 11 and individual markers 12 therebetween is a camera chain. Both the measuring link and the roadbed line are not required to be straight lines.

When operating, cameras in the multi-head camera station 11 synchronously acquire images; the cameras transmit the acquired image data of the markers 12 to an image processing system 13, the image processing system 13 extracts a position of each marker 12 in the image and sends it to a data processing center 14, and the data processing center 14 extracts the positions of the individual markers and performs processing on it in conjunction with settlement information of several control points (which are fixed strictly or settlement deformation of which is known) to obtain the final settlement data of the roadbed. Of course, in this process, the image data may also be directly transmitted to the data processing center 14 from the camera through a transmission system.

The multi-head camera station 11 is mounted on a roadbed where settlement might exist, and the control points and the marker points are connected together through the camera chain. In the measuring system, a fixed connection constraint exists between the cameras in the same multi-head camera station 11, that is, a pitching angle, a rotation angle and a settlement amount of the cameras are the same physical quantities respectively; the imaging of the different neighboring multi-head camera stations 11 to corresponding markers 12 therebetween has a same name constraint, that is, a settlement amount and an angle variation amount of the same marker 12 in images from different cameras are the same physical quantities respectively. The two constraints together with the camera chain build a displacement transfer measurement calculation relationship; a settlement amount, a pitching amount or a rotating amount of the multi-head camera station 11 itself are measured so as to eliminate influences therefrom, thus obtaining settlement of positions where the markers 12 and the multi-head camera stations 11 are located.

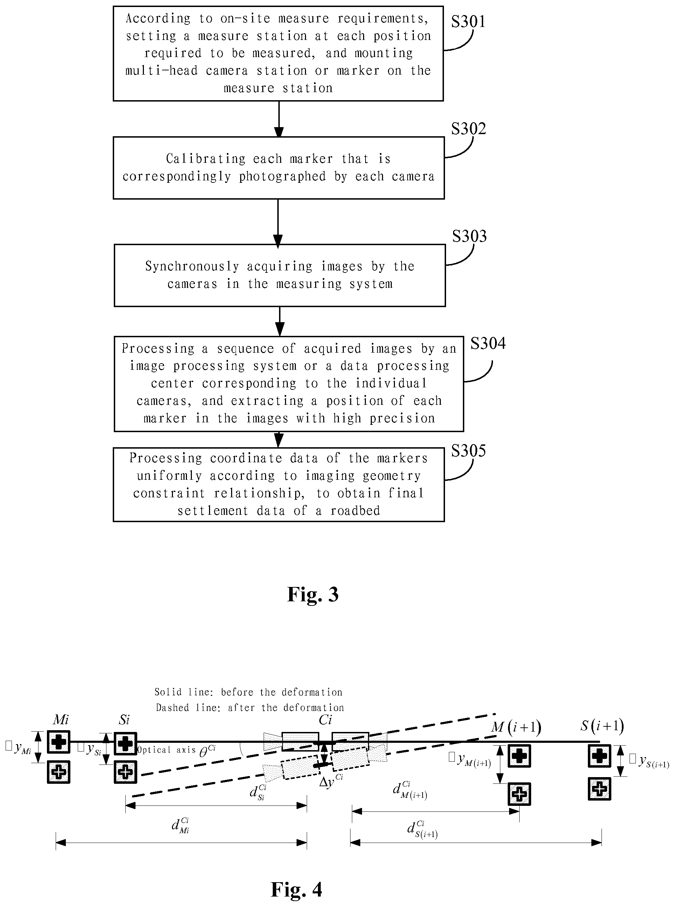

In the invention, displacements of the markers 12 in the images acquired by the multi-head camera stations 11 are used to transfer-measure settlement displacements of the markers 12 and the multi-head camera stations 11. Referring to Figure 3, the measurement process is as follows.

Step S301, according to on-site measurement requirements, setting a measuring station at each position required to be measured, and mounting a multi-head camera station 11 or a marker 12 on the measuring station.

Step S302, calibrating intrinsic parameters (a focal length, a principal point, a distortion coefficient, and the like) of each camera and a magnification of each cameral to a marker 12 that is photographed by the camera.

Step S303, synchronously acquiring images by the cameras in the measuring system.

Step S304, processing a sequence of acquired images by an image processing system or a data processing center corresponding to the individual cameras, and extracting a position of each marker 12 in the images at high precision. The extraction algorithm is relatively mature in the prior art, which does not need to be described in detail herein.

Step S305, processing coordinate data of the markers 12 uniformly in accordance with an imaging geometric constraint relationship, to obtain final settlement data of a roadbed.

Figure 2 is a certain section of an engineering building where settlement exists. Two markers 12 provided between neighboring multi-head camera stations 11 are taken as an example. It is assumed that there are n multi-head camera stations 11 and 2n+2 markers 12 in a camera chain, the markers 12 and the multi-head camera stations 11 are numbered from left to right as M1 (the first marker from left), S1 (the second marker from left), C1 (the first multi-head camera station),..., Mi, Si, Ci, M(i+1), S(i+1), C(i+1),..., M(n+1), S(n+1). Each camera photographs two markers 12 on the left or on the right simultaneously. A marker 12 may be mounted on a roadbed or other positions required to be measured (such as a tunnel vault, a roadbed on the other side), and may also be mounted together with a multi-head camera station 11 if necessary. It is assumed that only settlement occurs on a marker. As known from analysis, a vertical displacement amount of a marker 12 in the image photographed by a camera is mainly composed of the following four items:

    1. an image displacement caused by settlement of a marker itself;

    2. an image displacement caused by settlement of a camera itself;

    3. an image displacement caused by a pitching angle variation of a camera;

    4. an image displacement caused by a rotation angle variation of a camera.

In an actual engineering application, an azimuth angle variation in a horizontal plane might occur for the optical axis of a camera, the angle variation amount is generally very small and will not influence the measurement of a settlement amount, and therefore the angle will be ignored for simplifying the analysis. In the following, a settlement solving equation in the case of not considering a rotation angle is deduced at first, and then a settlement solving equation in the case of considering all the four factors is deduced.

As shown in Figure 4, in the case of considering the first three factors, the vertical displacement amounts, in the image, of both two markers 12 on the left and two markers 12 on the right photographed by the multi-head camera station Ci are as follows:

$$\begin{cases} h_{Mi}^{Ci} = k_{Mi}^{Ci}\left(\Delta y_{Mi} - \Delta y^{Ci} - d_{Mi}^{Ci}\cdot\sin\theta^{Ci}\right) \\ h_{Si}^{Ci} = k_{Si}^{Ci}\left(\Delta y_{Si} - \Delta y^{Ci} - d_{Si}^{Ci}\cdot\sin\theta^{Ci}\right) \\ h_{M(i+1)}^{Ci} = k_{M(i+1)}^{Ci}\left(\Delta y_{M(i+1)} - \Delta y^{Ci} + d_{M(i+1)}^{Ci}\cdot\sin\theta^{Ci}\right) \\ h_{S(i+1)}^{Ci} = k_{S(i+1)}^{Ci}\left(\Delta y_{S(i+1)} - \Delta y^{Ci} + d_{S(i+1)}^{Ci}\cdot\sin\theta^{Ci}\right) \end{cases} \tag{1}$$

In the equation (1), a serial number of a multi-head camera station is placed at the right superscript, a serial number of a marker is placed at the right subscript; where, h is a displacement amount of the marker in the camera image, k is a magnification of the image to the marker therein, $\Delta y$ is a settlement amount of the marker or the multi-head camera station, d is a distance between the marker and the corresponding camera, and $\theta^{Ci}$ is an angle variation amount of the multi-head camera station numbered as Ci. h, d, and k are known quantities, and $\Delta y$ and $\theta$ are quantities to be solved.

Analyzing is made according to equation (1), n multi-head camera stations and 2n+2 markers are provided, according to requirements, on a line to be measured (as shown in Figure 2), and thus 4n equations may be listed in the equation (1), with the number of unknowns being 4n+2. If several control points (which are fixed strictly or settlement deformations of which are known) exist at both ends or a center of the line, the actual number of unknowns in the equation (1) is reduced, and the number of unknowns is 4n when there exist two control points, therefore, the equation group is solvable, thus obtaining the vertical displacement amounts, in the image, of the positions of both two markers 12 on the left and two markers 12 on the right photographed by the multi-head camera station Ci.

In the following, the fourth factor is analyzed, that is, the influence of camera's rotation around the optical axis on an image displacement is considered.

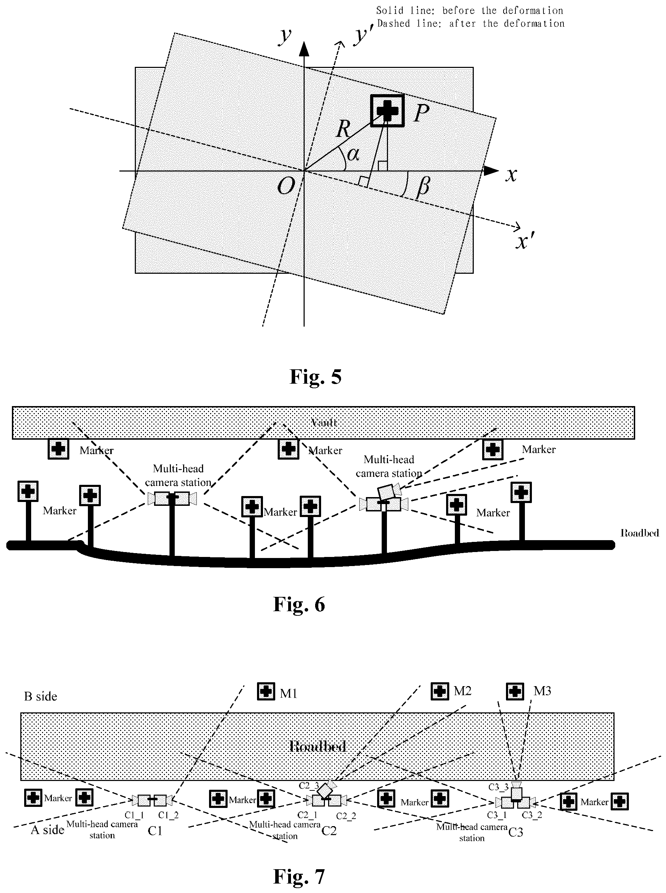

As shown in Figure 5, it is assumed that the coordinate system of the camera image before and after rotation are Oxy and Ox'y' respectively, and coordinates of a certain point P in the original image coordinate system and the new image coordinate system are $(R\cos\alpha, R\sin\alpha)$ and $(R\cos(\alpha-\beta), R\sin(\alpha-\beta))$ respectively, where, R is a distance between a point P and an origin (an image principal point), $\alpha$ is an angle between OP and the x axis (a known quantity), $\beta$ is an angle between the x' axis after rotation and the x axis (a quantity to be solved), and the counterclockwise direction is the positive direction. Since an equivalent settlement amount of the point P generated due to rotation of a camera is $\Delta g = R\sin(\alpha-\beta) - R\sin\alpha$, when $\beta$ is very small, $\cos\beta \approx 1$, $\sin\beta \approx \beta$, then $\Delta g \approx -R\beta\cos\alpha$. Therefore, after considering the influence of camera's rotation around the optical axis, the equation (1) becomes as follows:

$$\begin{cases} h_{Mi}^{Ci} = k_{Mi}^{Ci}\left(\Delta y_{Mi} - \Delta y^{Ci} - d_{Mi}^{Ci}\cdot\sin\theta^{Ci}\right) - \beta^{Ci}R_{Mi}^{Ci}\cos\alpha_{Mi}^{Ci} \\ h_{Si}^{Ci} = k_{Si}^{Ci}\left(\Delta y_{Si} - \Delta y^{Ci} - d_{Si}^{Ci}\cdot\sin\theta^{Ci}\right) - \beta^{Ci}R_{Si}^{Ci}\cos\alpha_{Si}^{Ci} \\ h_{M(i+1)}^{Ci} = k_{M(i+1)}^{Ci}\left(\Delta y_{M(i+1)} - \Delta y^{Ci} + d_{M(i+1)}^{Ci}\cdot\sin\theta^{Ci}\right) + \beta^{Ci}R_{M(i+1)}^{Ci}\cos\alpha_{M(i+1)}^{Ci} \\ h_{S(i+1)}^{Ci} = k_{S(i+1)}^{Ci}\left(\Delta y_{S(i+1)} - \Delta y^{Ci} + d_{S(i+1)}^{Ci}\cdot\sin\theta^{Ci}\right) + \beta^{Ci}R_{S(i+1)}^{Ci}\cos\alpha_{S(i+1)}^{Ci} \end{cases} \tag{2}$$

The equation (2) is called "displacement transfer measurement equation", where the superscript and subscript quantities have the same meanings as those in the equation (1). It is assumed that, the entire system has n multi-head camera stations, and there are two markers between every two neighboring multi-head camera stations, that is, there are 2n+n markers in total. When there is only one marker point on each marker, 4n equations may be listed according to the equation (2), and the number of unknowns is 5n+2. In order to make the equation group solvable, the following approach may be used:

a) multi-head camera stations and markers are arranged according to Figure 2, but two or more marker points are required to be provided on each marker, so that in the case where two marker points are taken to compute, the number of equations in the equation (2) becomes 8n, however the number of independent equations is 5n, and the number of unknowns is still 5n+2. Therefore, in order to solve settlement of other points, it needs to know two or more control points existing at both ends or a middle part of the line.

b) multi-head camera stations are arranged according to Figure 2, but three or more markers are provided between every two multi-head camera stations, so that the number of equations in the equation becomes 6n and the number of unknowns becomes 6n+2 in the case where three markers are taken; and in the case where there exist two or more control points, if the number of unknowns is equal to or less than 6n, then the equation group is solvable.

In actual measurement, multi-head camera stations and markers can also be provided according to different requirements, and then according to a principle of the above equation deduction, an actual transfer-measurement equation group is deduced based on a displacement of each marker imaged in neighboring cameras, thereby solving a settlement amount of each marker point in an engineering, a settlement amount of a position where a multi-head camera station is located, and a pitching amount and a rotation variation amount of a multi-head camera station.

In the invention, there is no need to adjust an optical axis of a camera to the horizontal direction, and there is also no need to use a camera self-stabilizing device, and a pitching angle variation amount, a rotation angle variation amount and a settlement amount of a multi-head camera station in a measurement process can be directly solved as an unknowns. Therefore, in this solution, a multi-head camera station can be mounted in a region where settlement might exist, and the settlement of the multi-head camera station itself can be solved, which allows a high engineering practicability.

An example of measuring settlement of a tunnel vault and an example of measuring settlement at both sides of a roadbed will be illustrated in the following.

The present technical solution may also measure settlement of a tunnel vault. As shown in Figure 6, several markers 12 are provided on several cross sections to be measured of a tunnel vault 51. A multi-head camera station 11 can see markers provided on the roadbed and markers provided on the vault simultaneously. Settlement of a marker of the vault can be solved as a part of the entire system, i.e. as unknowns in the equation (2), and may also be solved based on the measured settlement of the roadbed.

As mentioned previously, if a settlement amount, a pitching variation amount, and a rotation variation amount of a multi-head camera station have been obtained, a settlement amount of a marker of the vault can be solved easily. It is assumed that, a settlement amount, a pitching amount, and a rotation amount of a multi-head camera station Ci are $\Delta y^{Ci}$, $\theta^{Ci}$, and $\beta^{Ci}$ respectively, the displacement amount of the photographed marker point (the serial number is Tj) of the tunnel vault in the image is $h_{Tj}^{Ci}$, the distance between an image point and an image principal point is $R_{Tj}^{Ci}$, the angle between a line from the image point to the image principal point and the horizontal axis of the image is $\alpha_{Tj}^{Ci}$, the settlement amount of the marker point of the tunnel vault is $\Delta X_{Tj}$, and the distance between the marker of the tunnel vault and the camera is $D_{Tj}^{Ci}$, then

$$h_{Tj}^{Ci} = k_{Tj}^{Ci}\left(\Delta X_{Tj} - \Delta y^{Ci} + D_{Tj}^{Ci}\sin\theta^{Ci}\right) + \beta^{Ci}R_{Tj}^{Ci}\cos\alpha_{Tj}^{Ci} \qquad (3)$$

All quantities in the equation (3) except for $\Delta X_{Tj}$ are all known, therefore $\Delta X_{Tj}$ is solvable.

When this solution measures settlement of a tunnel vault, it is possible to use one camera in the multi-head camera station to photograph a marker of the vault, as can be seen from a multi-head camera station on the right hand of Figure 6. It is assumed that the angle between the camera and a camera photographing toward the horizontal direction is $\phi$, then the equation (3) becomes as follows:

$$h_{Tj}^{Ci} = k_{Tj}^{Ci}\left(\left(\Delta X_{Tj} - \Delta y^{Ci}\right)\cos\phi^{Ci} + D_{Tj}^{Ci}\sin\theta_i\right) + \beta^{Ci}R_{Tj}^{Ci}\cos\alpha_{Tj}^{Ci} \qquad (4)$$

the angle $\phi$ in the equation (4) may be calibrated in advance, therefore $\Delta X_{Tj}$ is also solvable.

In the similar way, the present technical solution may also measure settlement at both sides of a roadbed simultaneously. As shown in Figure 7, several multi-head camera stations and marker points are provided at a side A of the roadbed, and the multi-head camera station may be composed of two cameras, that is, a camera in each direction photographs markers at both sides of a road simultaneously, as shown in C1; and the multi-head camera station may be composed of three cameras, as shown in C2. Markers at a side B may also be arranged at a position parallel to the multi-head camera station, as shown by a multi-head camera station C3 and a marker M3 in Figure 6, a pitching angle (a rotation angle) of a camera for measuring settlement at the side A of the roadbed corresponds to a rotation angle (a pitching angle) of a camera for measuring settlement at the side B of the roadbed. Settlements at both sides of the roadbed may be solved simultaneously as a uniform measuring system, and may also be solved in such way that a settlement amount of a marker at the side B is solved after solving a settlement amount, a pitching variation amount and a rotation angle variation amount of the multi-head camera station at the side A of the roadbed.

An example of a measurement way in which a marker and a multi-head camera are mounted in a fixed connection way will be illustrated in the following.

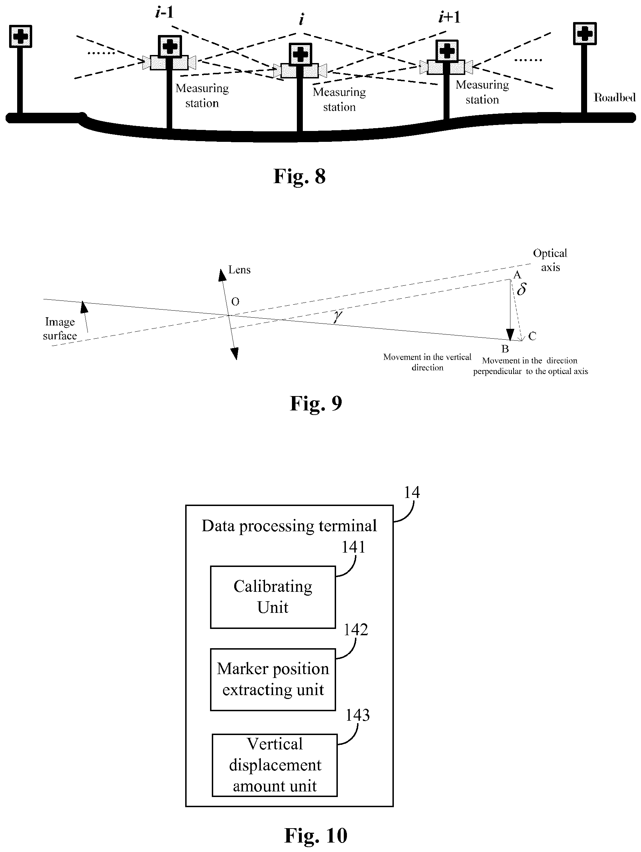

Figure 8 is an example of a way in which a marker and a multi-head camera station are directly mounted together to measure, one marker (which may be composed of a plurality of marker points) is mounted on each multi-head camera station to compose one measuring station. One or more markers may also be mounted between neighboring multi-head camera stations. In the following, analysis is made based on an example where no marker is mounted between neighboring multi-head camera stations, and at the ith measuring station, settlement of a marker is equal to settlement of a multi-head camera station, then it is assumed that the settlement is $\Delta y_i$, an inclination angle of a camera is $\theta_i$, and a rotation angle around the optical axis is $\beta_i$. In the case not considering the influence of a rotation angle, the equation (2) may be written as:

$$\begin{cases} h_{i-1}^{i} = k_{i-1}^{i}\left(\Delta y_{i-1} - \Delta y_{i} - d_{i-1}^{i} \cdot \sin\theta_{i}\right) - \beta_{i} R_{i-1}^{i} \cos\alpha_{i-1}^{i} \\ h_{i+1}^{i} = k_{i+1}^{i}\left(\Delta y_{i+1} - \Delta y_{i} + d_{i+1}^{i} \cdot \sin\theta_{i}\right) + \beta_{i} R_{i+1}^{i} \cos\alpha_{i+1}^{i} \end{cases} \qquad (5)$$

Where, $h_j^i$ , $k_j^i$ $\left(j = i-1, i+1\right)$ represent a vertical displacement amount and an image magnification of a marker of the jth (j=i-1,i+1) measuring station in the image from a camera of the ith measuring station respectively. And $d_j^i$ , $R_j^i$ $\left(j = i-1, i+1\right)$ have the similar meaning.

In the case not considering a rotation angle, the equation (5) becomes as follows:

$$\begin{cases} h_{i-1}^{i} = k_{i-1}^{i}\left(\Delta y_{i-1} - \Delta y_{i} - d_{i-1}^{i} \cdot \sin\theta_{i}\right) \\ h_{i+1}^{i} = k_{i+1}^{i}\left(\Delta y_{i+1} - \Delta y_{i} + d_{i+1}^{i} \cdot \sin\theta_{i}\right) \end{cases} \qquad (6)$$

In the case not considering the rotation angle, for n measuring stations, the number of unknowns is 2n+2, and the number of equations is 2n, then the equation group may be solved when there are two or more control points.

In the case of considering the rotation angle, for n measuring stations, the number of unknowns is 3n+2, and the number of equations is 2n, therefore each marker needs to contain two or more marker points therein. Taking the situation in which there exists two marker points as an example, when n measuring stations are contained in a measuring line, the number of equations is 4n, the number of mutually independent equations is 3n, and the number of unknowns is 3n+2, therefore the equation group may be solved when there exist two or more control points. Compared with a principle that a marker and a multi-head camera are arranged separately to measure, this way can only measure a settlement amount of a position where a camera is located, and the marker point and the measuring station are not utilized, therefore, for the same number of measuring stations, the number of the required cameras is multiplied, which increases costs in actual applications.

In this measurement way, one or more markers may also be provided between measuring stations composed of a multi-head camera and a marker, and a specific displacement transfer measurement equation may be deduced according to actual situations.

Error analysis is performed in the following.

(1) When the optical axis of a camera is not in the horizontal direction initially or the optical axis of a camera is not in the horizontal direction due to inclination of a mounting position of the camera, a measurement of a movement of a marker in the vertical direction will have certain error. As shown in Figure 9, the optical axis of a camera is not parallel to the horizontal plane, and the movement of the marker in the vertical direction is $\overrightarrow{AB}$, then movement effects in the image plane, of the $\overrightarrow{AB}$ and $\overrightarrow{AC}$ which is perpendicular to the optical axis direction are consistent. And an angle between $\overrightarrow{AB}$ and $\overrightarrow{AC}$ is equal to an angle between the optical axis and the horizontal plane, and let the angle be $\delta$ and an angle between OB and the optical axis be $\gamma$, then the following equation between $\overrightarrow{AB}$ and $\overrightarrow{AC}$ can be deduced according to a triangle relationship :

$$\frac{\left|\overrightarrow{AB}\right|}{\left|\overrightarrow{AC}\right|} = \frac{\cos\left(\gamma+\delta\right)}{\cos\delta} = \cos\gamma - \sin\gamma\tan\delta \qquad (7)$$

It is assumed that, a photographing view field of a camera is 1 m $\times$ 1 m, and a photographing distance is 50 m, then a view field angle is 1.15°, therefore $\gamma$ and $\delta$ both are a small angle, and at this time, the equation (7) may be

approximated by $\dfrac{\left|\overrightarrow{AB}\right|}{\left|\overrightarrow{AC}\right|} \approx 1 - \gamma\delta$, in the case of $\gamma=\delta=1.15°$, $\dfrac{\left|\overrightarrow{AB}\right|}{\left|\overrightarrow{AC}\right|} \approx 0.9996$, therefore error is very small, which may be ignored.

(2) In the case considering a two-head camera station, the optical axes of the two cameras are parallel as default, and in the case where there exist an angle between the optical axes of the two cameras, a photographing principle in this case is similar to that in the case where a multi-head camera station photographs a marker of a tunnel vault. It is assumed that an angle between the optical axes of the two cameras is $\phi$, then an equation used in the case where a two-head camera station Ci photographs a marker M(i+1) is changed from

$$h^{Ci}_{M(i+1)} = k^{Ci}_{M(i+1)}\left(\Delta y_{M(i+1)} - \Delta y^{Ci} + d^{Ci}_{M(i+1)} \cdot \sin\theta^{Ci}\right) + \beta^{Ci}R^{Ci}_{M(i+1)}\cos\alpha^{Ci}_{M(i+1)}$$

$$(2)$$

in the equation into

$$h^{Ci}_{M(i+1)} = k^{Ci}_{M(i+1)}\left(\left(\Delta y_{M(i+1)} - \Delta y^{Ci}\right)\cos\phi^{Ci} + d^{Ci}_{M(i+1)} \cdot \sin\theta^{Ci}\right) + \beta^{Ci}R^{Ci}_{M(i+1)}\cos\alpha^{Ci}_{M(i+1)}$$

A difference therebetween is just cos $\phi^{Ci}$, when $\phi^{Ci}$ is small, $\cos\phi^{Ci} \approx 1$, and at this time, the influence of this error can be ignored.

Based on the above method for automatically monitoring settlement of an engineering building, the present invention also provides a system for automatically monitoring settlement of an engineering building. Referring to Figure 10, a measuring station is provided at each point to be measured, the measuring station includes: a multi-head camera station 11 composed of two or more separate cameras that are connected fixedly; a marker 12 that can settle with the engineering building; and a data processing terminal 14 connected with the measuring stations, and the data processing terminal 14 includes a calibrating unit 141, a marker position extracting unit 142 and a vertical displacement amount calculating unit 143.

The cameras are adapted to synchronously acquire images of markers.

The calibrating unit 141 is adapted to calibrate intrinsic parameters (a focal length, a principal point, a distortion coefficient, and the like) of each camera and a magnification of the camera to each marker that is photographed by the camera.

The marker position extracting unit 142 is adapted to extract a position of each marker in the image.

The vertical displacement amount calculating unit 144 is adapted to perform operations on coordinate data of the markers in accordance with an imaging geometric constraint relationship, to obtain a vertical displacement amount of each marker, thus monitoring the settlement of the engineering building. For the specific calculation way, one can refer to the above various equations, which will not be described in detail herein.

In the invention, a fixed connection constraint exists between the cameras in the same multi-head camera station, that is, a pitching angle, a rotation angle and a settlement amount of the cameras are the same physical quantity respectively; the imaging of the different neighboring multi-head camera stations to corresponding markers 12 therebetween has a same name constraint, that is, a settlement amount and an angle variation amount of the markers having the same name in the images from different cameras are the same physical quantity respectively. The two constraints together with the camera chain build a displacement transfer measurement equation relationship, thus directly solving a settlement amount of each marker in a camera chain, and a pitching angle, a rotation angle and a settlement amount of each multi-head camera station in the camera chain. In this method, there is no need to adjust an optical axis of a camera to a horizontal direction, and there is also no need to use a camera self-stabilizing device, which solves a measurement problem in the practical engineering that settlement and inclination might exist at a measuring device mounting position.

In the invention, an optical axis of a camera does not need to be adjusted to the horizontal direction in a measurement process, and the multi-head camera station can be mounted in a region where settlement and inclination might exist on the roadbed thereof, thereby the invention has a high engineering practicability, and thereby can achieve high-precise, longtime, continuous and automatic measurement for settlement of a roadbed, a ground or a bridge.

**Claims**

1. A method for automatically monitoring settlement of an engineering building, wherein, a measuring station is provided (S301) at each point to be measured, the measuring station comprises: a multi-head camera station (11) composed of two or more separate cameras that are connected fixedly; and markers (12) that can settle with the engineering building, and wherein the method comprises:

   calibrating (S302) intrinsic parameters of each camera and a magnification of each camera to each marker (12) that is correspondingly photographed by the camera;
   synchronously acquiring (S303) images of markers (12) by the cameras, wherein each camera images more than one different marker (12) fixed to different points of the engineering building;
   extracting (S304) a position of each marker (12) in the images; and
   performing (S305) operations to coordinate data of each marker (12) in accordance with a displacement transfer measurement relationship built by a camera chain imaging geometric constraint relationship, to obtain a vertical displacement amount of a position of each measuring station, thereby monitoring the settlement of the engineering building.

2. The method according to claim 1, wherein, in the case not considering a rotation angle, a transfer measurement calculation way for calculating the vertical displacement amounts of both two markers (12) on the left and two markers (12) on the right that are photographed by the multi-head camera station (11) Ci is as follows:

$$\begin{cases} h_{Mi}^{Ci} = k_{Mi}^{Ci}\left(\Delta y_{Mi} - \Delta y^{Ci} - d_{Mi}^{Ci}\cdot\sin\theta^{Ci}\right) \\ h_{Si}^{Ci} = k_{Si}^{Ci}\left(\Delta y_{Si} - \Delta y^{Ci} - d_{Si}^{Ci}\cdot\sin\theta^{Ci}\right) \\ h_{M(i+1)}^{Ci} = k_{M(i+1)}^{Ci}\left(\Delta y_{M(i+1)} - \Delta y^{Ci} + d_{M(i+1)}^{Ci}\cdot\sin\theta^{Ci}\right) \\ h_{S(i+1)}^{Ci} = k_{S(i+1)}^{Ci}\left(\Delta y_{S(i+1)} - \Delta y^{Ci} + d_{S(i+1)}^{Ci}\cdot\sin\theta^{Ci}\right) \end{cases}$$

equation 1

   wherein, h is a displacement amount of the marker (12) in the camera image, k is a magnification of the image to the marker (12) therein, $\Delta y$ is a settlement amount of the marker (12) or the multi-head camera station (11), d is a distance between the marker (12) and the corresponding camera, Mi is the ith first marker (12) from left, Si is the ith second marker (12) from left, Ci is the ith multi-head camera station (11), and $\theta^{Ci}$ is an tilt angle variation amount of the multi-head camera station (11) numbered as Ci.

3. The method according to claim 2, wherein at least two control points which are fixed strictly or settlement deformations of which are known are provided at several measuring sites, so that the number of unknowns in the equation 1 is equal to or less than 4n.

4. The method according to claim 1, wherein, in the case considering a rotation angle, a transfer measurement calculation way for calculating the vertical displacement amounts of both two markers (12) on the left and two markers (12) on the right that are photographed by the multi-head camera station (11) Ci is as follows:

$$\begin{cases} h_{Mi}^{Ci} = k_{Mi}^{Ci}\left(\Delta y_{Mi} - \Delta y^{Ci} - d_{Mi}^{Ci}\cdot\sin\theta^{Ci}\right) - \beta^{Ci}R_{Mi}^{Ci}\cos\alpha_{Mi}^{Ci} \\ h_{Si}^{Ci} = k_{Si}^{Ci}\left(\Delta y_{Si} - \Delta y^{Ci} - d_{Si}^{Ci}\cdot\sin\theta^{Ci}\right) - \beta^{Ci}R_{Si}^{Ci}\cos\alpha_{Si}^{Ci} \\ h_{M(i+1)}^{Ci} = k_{M(i+1)}^{Ci}\left(\Delta y_{M(i+1)} - \Delta y^{Ci} + d_{M(i+1)}^{Ci}\cdot\sin\theta^{Ci}\right) + \beta^{Ci}R_{M(i+1)}^{Ci}\cos\alpha_{M(i+1)}^{Ci} \\ h_{S(i+1)}^{Ci} = k_{S(i+1)}^{Ci}\left(\Delta y_{S(i+1)} - \Delta y^{Ci} + d_{S(i+1)}^{Ci}\cdot\sin\theta^{Ci}\right) + \beta^{Ci}R_{S(i+1)}^{Ci}\cos\alpha_{S(i+1)}^{Ci} \end{cases}$$

equation 2

   wherein, it is assumed that the coordinate systems of the camera image before and after rotation are Oxy and Ox'y'

respectively, $\alpha$ is an angle between OP and the x axis, $\beta$ is an angle between the x' axis after rotation and the x axis, h is a displacement amount of the marker (12) in the camera image, and k is a magnification of the image to the marker (12) therein, $\Delta\gamma$ is a settlement amount of the marker (12) or the multi-head camera station (11), d is a distance between the marker (12) and the corresponding camera; Mi is the ith first marker (12) from left, Si is the ith second marker (12) from left, Ci is the ith multi-head camera station (11), R is a distance between a point P and an origin being an image principal point, and $\theta^{Ci}$ is an tilt angle variation amount of the multi-head camera station (11) numbered as Ci.

5. The method according to claim 4, wherein, each marker (12) is provided with two or more marker points thereon, so that the number of equations in the equation 2 is equal to or greater than 8n.

6. The method according to claim 4, wherein, three or more markers (12) are provided between every two multi-head camera stations (11), so that the number of equations in the equation 2 is equal to 6n in the case where three markers (12) are taken; and at least two control points which are fixed strictly or settlement deformations of which are known are provided at several measuring sites, so that the number of unknowns in the equation 2 is equal to or less than 6n.

7. The method according to claim 1, wherein, in the case where the engineering building is a tunnel vault, a settlement amount of the tunnel vault is:

$$h_{Tj}^{Ci} = k_{Tj}^{Ci}\left(\Delta X_{Tj} - \Delta y^{Ci} + D_{Tj}^{Ci}\sin\theta^{Ci}\right) + \beta^{Ci}R_{Tj}^{Ci}\cos\alpha_{Tj}^{Ci}$$

8. The method according to claim 1, wherein, in the case where the engineering building is a tunnel vault, and a marker (12) of the vault is photographed by one camera in the multi-head camera station (11), and it is assumed that the angle between the camera and a camera photographing toward a horizontal direction is $\Phi$, a settlement amount of the tunnel vault is:

$$h_{Tj}^{Ci} = k_{Tj}^{Ci}\left(\left(\Delta X_{Tj} - \Delta y^{Ci}\right)\cos\phi^{Ci} + D_{Tj}^{Ci}\sin\theta_i\right) + \beta^{Ci}R_{Tj}^{Ci}\cos\alpha_{Tj}^{Ci}$$

wherein, a settlement amount, a pitching amount and a rotating amount of the multi-head camera station (11) Ci are $\Delta y^{Ci}$, $\theta^{Ci}$ and $\beta^{Ci}$ respectively, the displacement amount of the photographed marker point of the vault in the image is $h_{Tj}^{Ci}$, the distance between an image point and an image principal point is $R_{Tj}^{Ci}$, the angle between a line from the image point to the image principal point and the horizontal axis of the image is $\alpha_{Tj}^{Ci}$, the settlement amount of the marker point of the vault is $\Delta X_{Tj}$, and the distance between the marker of the vault and the camera is $D_{Tj}^{Ci}$.

9. A system for automatically monitoring settlement of an engineering building, wherein, a measuring station is provided at each point to be measured, the measuring station comprises: a multi-head camera station (11) composed of two or more separate cameras that are connected fixedly; markers (12) that can settle with the engineering building; and a data processing terminal (14) connected with the measuring stations, and the data processing terminal comprises a calibrating unit (141), a marker position extracting unit (142) and a vertical displacement amount calculating unit (143), and wherein

the cameras are adapted to synchronously acquire images of markers (12), wherein each camera images more than one different marker (12) fixed to different points of the engineering building, wherein a geometric relationship between cameras in the multi-head camera station (11) is set according to on-site requirements, and is fixed and known;
the calibrating unit (141) is adapted to calibrate intrinsic parameters of each camera and a magnification of the camera to each marker (12) that is photographed by the camera;
the marker position extracting unit (142) is adapted to extract a position of each marker (12) in the images; and
the vertical displacement amount calculating unit (143) is adapted to perform operations to coordinate data of each marker (12) in accordance with an imaging geometric constraint relationship, to obtain a vertical displacement amount of a position of each measuring station, and thereby monitoring the settlement of the engineering building.

10. The system according to claim 9, wherein the multi-head camera station (11) is in a fixed connection with the marker (12).

11. The system according to claim 9, wherein a control point which is fixed strictly or settlement deformation of which is known is provided at several measuring sites.

**Patentansprüche**

1. Verfahren zum automatischen Überwachen eines Setzens eines Ingenieurbauwerks, wobei eine Messstation an jedem zu messenden Punkt vorgesehen (S301) ist, wobei die Messstation eine Mehrkopfkamerastation (11), die aus zwei oder mehreren getrennten Kameras, die fest verbunden sind, gebildet ist, und Markierungen (12) umfasst, die sich mit dem Ingenieurbauwerk setzen können, wobei das Verfahren umfasst:

Kalibrieren (S302) von intrinsischen Parametern einer jeden Kamera und einer Vergrößerung einer jeden Kamera auf jede Markierung (12), die entsprechend durch die Kamera fotografiert wird,
synchrones Erhalten (S303) von Bildern von Markierungen (12) durch die Kameras, wobei jede Kamera mehr als eine unterschiedliche Markierung (12) aufnimmt, die an unterschiedlichen Punkten des Ingenieurbauwerks fixiert sind,
Extrahieren (S304) einer Position einer jeden Markierung (12) in den Bildern, und
Durchführen (S305) von Operationen an Koordinatendaten einer jeden Markierung (12) entsprechend einer Versatztransfermessbeziehung, die durch eine geometrische Beschränkungsbeziehung einer Kamerakettenaufnahme gebildet ist, um ein vertikales Versatzmaß einer Position einer jeden Messstation zu erhalten, wodurch das Setzen des Ingenieurbauwerks überwacht wird.

2. Verfahren nach Anspruch 1, wobei, im Fall, dass ein Rotationswinkel nicht berücksichtigt wird, ein Transfermessberechnungsweg zum Berechnen des vertikalen Versatzmaßes von sowohl zwei Markierungen (12) zur linken und zwei Markierungen (12) zur rechten, die durch die Multikopfkamerastation Ci (11) aufgenommen wurde, wie folgt ist:

$$\begin{cases} h_{Mi}^{Ci} = k_{Mi}^{Ci} \left( \Delta y_{Mi} - \Delta y^{Ci} - d_{Mi}^{Ci} \cdot \sin \theta^{Ci} \right) \\ h_{Si}^{Ci} = k_{Si}^{Ci} \left( \Delta y_{Si} - \Delta y^{Ci} - d_{Si}^{Ci} \cdot \sin \theta^{Ci} \right) \\ h_{M(i+1)}^{Ci} = k_{M(i+1)}^{Ci} \left( \Delta y_{M(i+1)} - \Delta y^{Ci} + d_{M(i+1)}^{Ci} \cdot \sin \theta^{Ci} \right) \\ h_{S(i+1)}^{Ci} = k_{S(i+1)}^{Ci} \left( \Delta y_{S(i+1)} - \Delta y^{Ci} + d_{S(i+1)}^{Ci} \cdot \sin \theta^{Ci} \right) \end{cases}$$
Gleichung 1

wobei h ein Versatzmaß der Markierung (12) in dem Kamerabild ist, k eine Vergrößerung des Bildes auf die Markierung (12) darin ist, $\Delta y$ ein Setzmaß der Markierung (12) oder der Multikopfkamerastation (11) ist, d eine Entfernung zwischen der Markierung (12) und der entsprechenden Kamera ist, Mi die i-te erste Markierung (12) von links ist, Si die i-te zweite Markierung (12) von links ist, Ci die i-te Multikopfkamerastation (11) ist und $\theta^{Ci}$ ein Neigungswin-kelvariationsmaß der Multikopfkamerastation (11) ist, die als Ci numeriert ist.

3. Verfahren nach Anspruch 2, wobei wenigstens zwei Kontrollpunkte, die strikt fixiert sind oder deren Setzverformungen bekannt sind, an verschiedenen Messpositionen vorgesehen sind, so dass die Zahl von Unbekannten in Gleichung 1 gleich oder geringer als 4n ist.

4. Verfahren nach Anspruch 1, wobei im Fall, dass ein Rotationswinkel berücksichtigt wird, ein Transfermessberechnungsweg zum Berechnen der vertikalen Versetzmengen von sowohl zwei Markierungen (12) zur linken als auch zwei Markierungen (12) zur rechten, die durch die Multikopfkamerastation Ci (11) aufgenommen wurden, wie folgt ist.

$$\begin{cases} h_{Mi}^{Ci} = k_{Mi}^{Ci}\left(\Delta y_{Mi} - \Delta y^{Ci} - d_{Mi}^{Ci}\cdot\sin\theta^{Ci}\right) - \beta^{Ci}R_{Mi}^{Ci}\cos\alpha_{Mi}^{Ci} \\[2mm] h_{Si}^{Ci} = k_{Si}^{Ci}\left(\Delta y_{Si} - \Delta y^{Ci} - d_{Si}^{Ci}\cdot\sin\theta^{Ci}\right) - \beta^{Ci}R_{Si}^{Ci}\cos\alpha_{Si}^{Ci} \\[2mm] h_{M(i+1)}^{Ci} = k_{M(i+1)}^{Ci}\left(\Delta y_{M(i+1)} - \Delta y^{Ci} + d_{M(i+1)}^{Ci}\cdot\sin\theta^{Ci}\right) + \beta^{Ci}R_{M(i+1)}^{Ci}\cos\alpha_{M(i+1)}^{Ci} \\[2mm] h_{S(i+1)}^{Ci} = k_{S(i+1)}^{Ci}\left(\Delta y_{S(i+1)} - \Delta y^{Ci} + d_{S(i+1)}^{Ci}\cdot\sin\theta^{Ci}\right) + \beta^{Ci}R_{S(i+1)}^{Ci}\cos\alpha_{S(i+1)}^{Ci} \end{cases}$$

Gleichung 2

wobei angenommen wird, dass die Koordinatensysteme des Kamerabildes vor und nach Rotation jeweils Oxy und Ox'y' sind, $\alpha$ ein Winkel zwischen OP und der x-Achse ist, $\beta$ ein Winkel zwischen der x-Achse nach der Rotation und der x-Achse ist, h ein Versatzmaß der Markierung (12) in dem Kamerabild ist, und k eine Vergrößerung des Bildes auf die Markierung (12) darin ist, $\Delta y$ ein Setzmaß der Markierung (12) oder der Multikopfkamerastation (11) ist, d eine Entfernung zwischen der Markierung (12) und der entsprechenden Kamera ist, Mi die i-te erste Markierung (12) von links ist, Si die i-te zweite Markierung (12) von links ist, Ci die i-te Multikopfkamerastation (11) ist, R eine Entfernung zwischen einem Punkt P und einem Ursprung ist, der ein Bildhauptpunkt ist, und $\theta^{Ci}$ ein Neigungswinkelvariationsmaß der Multikopfkamerastation (11) ist, die als Ci numeriert ist.

5. Verfahren nach Anspruch 4, wobei jede Markierung (12) mit zwei oder mehr Markierungspunkten darauf versehen ist, so dass die Zahl von Gleichungen in Gleichung 2 gleich oder größer als 8n ist.

6. Verfahren nach Anspruch 4, wobei drei oder mehr Markierungen (12) zwischen jeden zwei Multikopfkamerastationen (11) vorgesehen sind, so dass die Zahl von Gleichungen in Gleichung 2 gleich 6n in dem Fall ist, bei dem drei Markierungen (12) genommen werden, und wenigstens zwei Kontrollpunkte, die strikt fixiert sind oder deren Setzverformungen bekannt sind, an verschiedenen Messpositionen vorgesehen sind, so dass die Zahl von Unbekannten in der Gleichung 2 gleich oder weniger als 6n beträgt.

7. Verfahren nach Anspruch 1, wobei im Fall, dass das Ingenieurbauwerk eine Tunneldecke ist, ein Setzmaß der Tunneldecke

$$h_{Tj}^{Ci} = k_{Tj}^{Ci}\left(\Delta X_{Tj} - \Delta y^{Ci} + D_{Tj}^{Ci}\sin\theta^{Ci}\right) + \beta^{Ci}R_{Tj}^{Ci}\cos\alpha_{Tj}^{Ci}$$

ist.

8. Verfahren nach Anspruch 1, wobei im Fall, dass das Ingenieurbauwerk eine Tunneldecke ist, und eine Markierung (12) der Decke durch eine Kamera in der Multikamerastation (11) fotografiert wird, und angenommen wird, dass der Winkel zwischen der Kamera und einer Kamera, die in horizontaler Richtung fotografiert, $\Phi$ ist, ein Setzmaß des Decke

$$h_{Tj}^{Ci} = k_{Tj}^{Ci}\left(\left(\Delta X_{Tj} - \Delta y^{Ci}\right)\cos\phi^{Ci} + D_{Tj}^{Ci}\sin\theta_i\right) + \beta^{Ci}R_{Tj}^{Ci}\cos\alpha_{Tj}^{Ci}$$

ist,
wobei ein Setzmaß, ein Sturzmaß und ein Rotationsmaß der Multikopfkamerastation (11) Ci $\Delta y^{Ci}$, $\theta^{Ci}$ und $\beta^{Ci}$ sind, das Versatzmaß des fotografierten Markierungspunktes an der Decke in dem Bild $h_{Tj}^{Ci}$ ist, die Entfernung zwischen einem Bildpunkt und einem Bildhauptpunkt $R_{Tj}^{Ci}$ ist, der Winkel zwischen einer Linie von dem Bildpunkt zu dem Bildhauptpunkt und der horizontalen Achse des Bildes $\alpha_{Tj}^{Ci}$ ist, das Setzmaß des Markierungspunktes der Decke $\Delta X_{Tj}$ ist, und die Entfernung zwischen der Markierung der Decke und der Kamera $D_{Tj}^{Ci}$ ist.

9. System zum automatischen Überwachen eines Setzens eines Ingenieurbauwerks, wobei eine Messstation an jedem zu messenden Punkt vorgesehen ist, wobei die Messstation eine Mehrkopfkamerastation (11), die aus zwei oder mehreren getrennten Kameras, die fest verbunden sind, gebildet ist, Markierungen (12), die sich mit dem Ingenieurbauwerk setzen können, und ein Datenverarbeitungsendgerät (14) umfasst, das mit den Messstationen verbunden ist, und das Datenverarbeitungsendgerät eine Kalibiereinheit (141), einer Markierungspositionsextraktionseinheit (142) und eine Berechnungseinheit (143) für ein vertikales Versatzmaß umfasst, und wobei:

die Kameras ausgestaltet sind, synchron Bilder von Markierungen (12) zu erhalten, wobei jede Kamera mehr als eine unterschiedliche Markierung (12) aufnimmt, die an unterschiedlichen Punkten des Ingenieurbauwerks fixiert sind, wobei eine geometrische Beziehung zwischen Kameras in der Mehrkopfkamerastation (11) entsprechend von Vorort-Erfordernissen eingestellt ist und fixiert und bekannt ist,
die Kalibiereinheit (141) ausgestaltet ist, intrinsische Parameter einer jeden Kamera und eine Vergrößerung einer jeden Kamera auf jede Markierung (12) einzustellen, die durch die Kamera fotografiert wird,
die Markierungspositionsextraktionseinheit (142) ausgestaltet ist, eine Position einer jeden Markierung (12) in den Bildern zu extrahieren, und
die Berechnungseinheit (143) für ein vertikales Versatzmaß ausgestaltet ist, Operationen an Koordinatendaten einer jeden Markierung (12) entsprechend einer geometrischen Beschränkungsbeziehung einer Aufnahme durchzuführen, um ein vertikales Versatzmaß einer Position einer jeden Messstation zu erhalten, wodurch das Setzen des Ingenieurbauwerks überwacht wird.

10. System nach Anspruch 9, wobei die Multikopfkamerastation (11) in einer fixierten Verbindung mit der Markierung (12) steht.

11. System nach Anspruch 9, wobei an verschiedenen Messpositionen ein Kontrollpunkt, der strikt fixiert ist oder dessen Setzverformung bekannt ist, vorgesehen ist.

**Revendications**

1. Procédé pour surveiller automatiquement l'affaissement d'une construction d'ingénierie, dans lequel, une station de mesure (S301) est fournie à chaque point à mesurer, la station de mesure comprend : une station de caméra multi-tête (11) composée de deux caméras séparées ou plus qui sont connectées de manière fixe ; et des marqueurs (12) qui peuvent s'affaisser avec la construction d'ingénierie, et dans lequel le procédé comprend :

l'étalonnage (S302) des paramètres intrinsèques de chaque caméra et d'un grossissement de chaque caméra par rapport à chaque marqueur (12) qui est photographié de manière correspondante par la caméra ;
l'acquisition de manière synchrone (S303) d'images de marqueurs (12) par les caméras, dans lequel chaque caméra prend l'image de plus d'un marqueur (12) différent fixé à différents points de la construction d'ingénierie ;
l'extraction (S304) d'une position de chaque marqueur (12) sur les images ; et
la mise en œuvre (S305) d'opérations sur des données de coordonnées de chaque marqueur (12) conformément à une relation de mesure de transfert de déplacement construite par une relation de contrainte géométrique d'imagerie de chaîne de caméras, pour obtenir une quantité de déplacement vertical d'une position de chaque station de mesure, pour ainsi surveiller l'affaissement de la construction d'ingénierie.

2. Procédé selon la revendication 1, dans lequel, dans le cas où un angle de rotation n'est pas pris en compte, un moyen de calcul de mesure de transfert pour calculer les quantités de déplacement vertical à la fois de deux marqueurs (12) à gauche et de deux marqueurs (12) à droite qui sont photographiés par la station de caméra multi-tête (11) Ci est le suivant :

$$\begin{cases} h_{Mi}^{Ci} = k_{Mi}^{Ci}\left(\Delta y_{Mi} - \Delta y^{Ci} - d_{Mi}^{Ci}\cdot\sin\theta^{Ci}\right) \\[2mm] h_{Si}^{Ci} = k_{Si}^{Ci}\left(\Delta y_{Si} - \Delta y^{Ci} - d_{Si}^{Ci}\cdot\sin\theta^{Ci}\right) \\[2mm] h_{M(i+1)}^{Ci} = k_{M(i+1)}^{Ci}\left(\Delta y_{M(i+1)} - \Delta y^{Ci} + d_{M(i+1)}^{Ci}\cdot\sin\theta^{Ci}\right) \\[2mm] h_{S(i+1)}^{Ci} = k_{S(i+1)}^{Ci}\left(\Delta y_{S(i+1)} - \Delta y^{Ci} + d_{S(i+1)}^{Ci}\cdot\sin\theta^{Ci}\right) \end{cases}$$

<div align="center">équation 1</div>

dans lequel, h est une quantité de déplacement du marqueur (12) sur l'image de caméra, k est un grossissement de l'image par rapport au marqueur (12) à l'intérieur de celle-ci, $\Delta y$ est une quantité d'affaissement du marqueur (12) ou de la station de caméra multi-tête (11), d est une distance entre le marqueur (12) et la caméra correspondante, Mi est le ième premier marqueur (12) à partir de la gauche, Si est le ième second marqueur (12) à partir de la gauche, Ci est la ième station de caméra multi-tête (11), et $\theta^{Ci}$ est une quantité de variation d'angle d'inclinaison de la station de caméra multi-tête (11) numérotée par Ci.

3. Procédé selon la revendication 2, dans lequel au moins deux points de contrôle qui sont strictement fixes ou dont les déformations par affaissement sont connues sont fournis au niveau de plusieurs sites de mesure, de sorte que le nombre d'inconnues dans l'équation 1 est inférieur ou égal à 4n.

4. Procédé selon la revendication 1, dans lequel, dans le cas où un angle de rotation est pris en compte, un moyen de calcul de mesure de transfert pour calculer les quantités de déplacement vertical à la fois des deux marqueurs (12) à gauche et de deux marqueurs (12) à droite qui sont photographiés par la station de caméra multi-tête (11) Ci est le suivant :

$$\begin{cases} h_{Mi}^{Ci} = k_{Mi}^{Ci}\left(\Delta y_{Mi} - \Delta y^{Ci} - d_{Mi}^{Ci}\cdot\sin\theta^{Ci}\right) - \beta^{Ci}R_{Mi}^{Ci}\cos\alpha_{Mi}^{Ci} \\[2mm] h_{Si}^{Ci} = k_{Si}^{Ci}\left(\Delta y_{Si} - \Delta y^{Ci} - d_{Si}^{Ci}\cdot\sin\theta^{Ci}\right) - \beta^{Ci}R_{Si}^{Ci}\cos\alpha_{Si}^{Ci} \\[2mm] h_{M(i+1)}^{Ci} = k_{M(i+1)}^{Ci}\left(\Delta y_{M(i+1)} - \Delta y^{Ci} + d_{M(i+1)}^{Ci}\cdot\sin\theta^{Ci}\right) + \beta^{Ci}R_{M(i+1)}^{Ci}\cos\alpha_{M(i+1)}^{Ci} \\[2mm] h_{S(i+1)}^{Ci} = k_{S(i+1)}^{Ci}\left(\Delta y_{S(i+1)} - \Delta y^{Ci} + d_{S(i+1)}^{Ci}\cdot\sin\theta^{Ci}\right) + \beta^{Ci}R_{S(i+1)}^{Ci}\cos\alpha_{S(i+1)}^{Ci} \end{cases}$$

<div align="center">équation 2</div>

dans lequel, on suppose que les systèmes de coordonnées de l'image de caméra avant et après rotation sont respectivement Oxy et Ox'y', $\alpha$ est un angle entre OP et l'axe x, $\beta$ est un angle entre l'axe x' après rotation et l'axe x, h est une quantité de déplacement du marqueur (12) sur l'image de caméra, et k est un grossissement de l'image par rapport au marqueur (12) à l'intérieur de celle-ci, $\Delta y$ est une quantité d'affaissement du marqueur (12) ou de la station de caméra multi-tête (11), d est une distance entre le marqueur (12) et la caméra correspondante ; Mi est le ième premier marqueur (12) à partir de la gauche, Si est le ième second marqueur (12) à partir de la gauche, Ci est la ième station de caméra multi-tête (11), R est une distance entre un point P et une origine qui est un point principal d'image, et $\theta^{Ci}$ est une quantité de variation d'angle d'inclinaison de la station de caméra multi-tête (11) numérotée par Ci.

5. Procédé selon la revendication 4, dans lequel, chaque marqueur (12) est pourvu de deux points de marqueur ou plus sur celui-ci, de sorte que le nombre d'équations dans l'équation 2 est supérieur ou égal à 8n.

6. Procédé selon la revendication 4, dans lequel, trois marqueurs (12) ou plus sont fournis entre deux stations de caméra multi-tête (11), de sorte que le nombre d'équations dans l'équation 2 est égal à 6n dans le cas où trois marqueurs (12) sont pris ; et au moins deux points de contrôle qui sont strictement fixes ou dont les déformations par affaissement sont connues sont fournis au niveau de plusieurs sites de mesure, de sorte que le nombre d'inconnues dans l'équation 2 est inférieur ou égal à 6n.

**7.** Procédé selon la revendication 1, dans lequel, dans le cas où la construction d'ingénierie est une voûte de tunnel, une quantité d'affaissement de la voûte de tunnel est :

$$ h_{Tj}^{Ci} = k_{Tj}^{Ci} \left( \Delta X_{Tj} - \Delta y^{Ci} + D_{Tj}^{Ci} \sin \theta^{Ci} \right) + \beta^{Ci} R_{Tj}^{Ci} \cos \alpha_{Tj}^{Ci} $$

**8.** Procédé selon la revendication 1, dans lequel, dans le cas où la construction d'ingénierie est une voûte de tunnel, et qu'un marqueur (12) de la voûte est photographié par une caméra dans la station de caméra multi-tête (11), et que l'on suppose que l'angle entre la caméra et une caméra photographiant vers une direction horizontale est Φ, une quantité d'affaissement de la voûte de tunnel est :

$$ h_{Tj}^{Ci} = k_{Tj}^{Ci} \left( \left( \Delta X_{Tj} - \Delta y^{Ci} \right) \cos \phi^{Ci} + D_{Tj}^{Ci} \sin \theta_i \right) + \beta^{Ci} R_{Tj}^{Ci} \cos \alpha_{Tj}^{Ci} $$

dans lequel, une quantité d'affaissement, une quantité de tangage et une quantité de rotation de la station de caméra multi-tête (11) Ci sont respectivement $\Delta y^{Ci}$, $\theta^{Ci}$ et $\beta^{Ci}$, la quantité de déplacement du point de marqueur photographié de la voûte sur l'image est $h_{Tj}^{Ci}$, la distance entre un point d'image et un point principal d'image est $R_{Tj}^{Ci}$, l'angle entre une ligne allant du point d'image au point principal d'image et l'axe horizontal de l'image est $\alpha_{Tj}^{Ci}$, la quantité d'affaissement du point de marqueur de la voûte est $\Delta X_{Tj}$, et la distance entre le marqueur de la voûte et la caméra est $D_{Tj}^{Ci}$.

**9.** Système pour surveiller automatiquement l'affaissement d'une construction d'ingénierie, dans lequel, une station de mesure est fournie à chaque point à mesurer, la station de mesure comprend : une station de caméra multi-tête (11) composée de deux caméras séparées ou plus qui sont connectées de manière fixe ; des marqueurs (12) qui peuvent s'affaisser avec la construction d'ingénierie ; et un terminal de traitement de données (14) connecté aux stations de mesure, et le terminal de traitement de données comprend une unité d'étalonnage (141), une unité d'extraction de position de marqueur (142) et une unité de calcul de quantité de déplacement vertical (143), et dans lequel

les caméras sont adaptées pour acquérir de manière synchrone des images de marqueurs (12), dans lequel chaque caméra prend l'image de plus d'un marqueur (12) différent fixé à différents points de la construction d'ingénierie, dans lequel une relation géométrique entre des caméras dans la station de caméra multi-tête (11) est définie conformément aux exigences sur site, et est fixe et connue ;
l'unité d'étalonnage (141) est adaptée pour calibrer des paramètres intrinsèques de chaque caméra et un grossissement de la caméra par rapport à chaque marqueur (12) qui est photographié par la caméra ;
l'unité d'extraction de position de marqueur (142) est adaptée pour extraire une position de chaque marqueur (12) sur les images ; et
l'unité de calcul de quantité de déplacement vertical (143) est adaptée pour mettre en œuvre des opérations sur des données de coordonnées de chaque marqueur (12) conformément à une relation de contrainte géométrique d'imagerie, pour obtenir une quantité de déplacement vertical d'une position de chaque station de mesure, et ainsi surveiller l'affaissement de la construction d'ingénierie.

**10.** Système selon la revendication 9, dans lequel la station de caméra multi-tête (11) est en connexion fixe avec le marqueur (12).

**11.** Système selon la revendication 9, dans lequel un point de contrôle qui est strictement fixe ou dont la déformation par affaissement est connue est fourni au niveau de plusieurs sites de mesure.

**Fig. 1**

**Fig. 2**

According to on-site measure requirements, setting a measure station at each position required to be measured, and mounting multi-head camera station or marker on the measure station | S301

Calibrating each marker that is correspondingly photographed by each camera | S302

Synchronously acquiring images by the cameras in the measuring system | S303

Processing a sequence of acquired images by an image processing system or a data processing center corresponding to the individual cameras, and extracting a position of each marker in the images with high precision | S304

Processing coordinate data of the markers uniformly according to imaging geometry constraint relationship, to obtain final settlement data of a roadbed | S305

**Fig. 3**

Solid line: before the deformation
Dashed line: after the deformation

$Mi$  $Si$  $Ci$  $M(i+1)$  $S(i+1)$

$\square y_{Mi}$  $\square y_{Si}$  Optical axis $\theta^{Ci}$  $\Delta y^{Ci}$  $\square y_{M(i+1)}$  $\square y_{S(i+1)}$

$d_{Si}^{Ci}$  $d_{M(i+1)}^{Ci}$

$d_{Mi}^{Ci}$  $d_{S(i+1)}^{Ci}$

**Fig. 4**

Solid line: before the deformation
Dashed line: after the deformation

**Fig. 5**

**Fig. 6**

**Fig. 7**

*i*-1      *i*      *i*+1

Measuring station    Measuring station    Measuring station    Roadbed

**Fig. 8**

Lens      Optical axis

O    A   $\delta$

Image surface    $\gamma$    C

B

Movement in the vertical direction    Movement in the direction perpendicular to the optical axis

**Fig. 9**

Data processing terminal   14

141

Calibrating Unit

142

Marker position extracting unit

143

Vertical displacement amount unit

**Fig. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4656743 A

**Non-patent literature cited in the description**

- **ZHICHAO CHAO et al.** *Applied Optics,* 01 October 2010, vol. 49 (28), 5192-5198